# EUROPÄISCHE PATENTSCHRIFT

(11) **EP 3 102 614 B1**
(45) Veröffentlichungstag und Bekanntmachung des Hinweises auf die Patenterteilung: **03.01.2018**
(21) Anmeldenummer: 15706359.5
(22) Anmeldetag: 02.02.2015
(51) Int. Cl.: C08B 1/08, C08B 11/08

(54) **HERSTELLUNG EINER FÜR DERIVATISIERUNGSREAKTIONEN GEEIGNETEN ALKALICELLULOSE**
PRODUCTION OF AN ALKALI CELLULOSE WHICH IS SUITABLE FOR DERIVATIZATION REACTIONS
PRODUCTION D'UNE CELLULOSE ALCALINE APPROPRIÉE POUR DES RÉACTIONS DE DÉRIVATISATION

(30) Priorität: 03.02.2014 DE 102014001253
(43) Veröffentlichungstag der Anmeldung: 14.12.2016
(73) Patentinhaber: Möbius, Heinzhorst, 93342 Saal/Do. (DE)
(72) Erfinder: FISCHER, Klaus, 01737 Hartha (DE)
(74) Vertreter: Schäfer, Matthias W.
(86) Internationale Anmeldenummer: PCT/DE2015/000038
(87) Internationale Veröffentlichungsnummer: WO 2015/113548

(56) Entgegenhaltungen:
- EP-A1- 1 065 216
- EP-A1- 1 245 576
- EP-A2- 0 049 815
- DD-A1- 222 887
- US-A1- 2002 099 203

## Beschreibung

### Gebiet der Erfindung

Die Erfindung betrifft ein Verfahren zur Herstellung einer für Derivatisierungsreaktionen geeigneten Alkalicellulose aus unbehandeltem nativem Zellstoff bzw. Cellulose.

Alkalicellulose ist ein Zwischenprodukt zur Herstellung von Celluloseäthern als Endprodukte der chemischen Industrie bzw. von Celluloseestern, wie z.B. Cellulosexanthogenat, für die Herstellung von Produkten aus regenerativer Cellulose. Produkte aus regenerativer Cellulose sind beispielsweise Fasern und Filamente nach dem Viskoseverfahren, oder auch entsprechende Filme bzw. Folien wie Cellophan.

Für die Eignung der Alkalicellulose als Zwischenprodukt für Derivatisierungsreaktionen ist es unerlässlich, während der Alkalisierung die Zugänglichkeit der Cellulosemoleküle für die chemischen Agenzien zu verbessern. Die in den nativen Cellulosefasern vorliegende Kristallstruktur der sogenannten Cellulose I muss beim Herstellungsprozess in das aufgeweitete Kristallgitter der sogenannte Cellulose II bzw. in amorphe Cellulose als Vorstufe der Cellulose II umgewandelt werden.

### Stand der Technik

Das Viskoseverfahren ist seit vielen Jahren bekannt und stellt ein typisches Beispiel für eine im industriellen Maßstab durchgeführte Derivatisierungsreaktion dar. Das Verfahren wird beispielsweise ausführlich in K. Götze, Chemiefasern nach dem Viskoseverfahren, Springer-Verlag, 3. Auflage (1967) und allgemeiner in Ullmanns Encyclopaedia of Industrial Chemistry, VCH Publishing, 5. Auflage, Band A5 (1986), Kapitel "Cellulose" beschrieben.

Die herkömmlichen Schritte des Viskoseverfahrens können wie folgt zusammengefasst werden:

Chemiezellstoff oder ein anderer geeigneter cellulosehaltiger Rohstoff wird im Maischverfahren alkalisiert. Durch Abtrennen der überschüssigen Flüssigkeit in Pressen erhält man die gebildete Alkalicellulose. Die isolierte Alkalicellulose wird üblicherweise vorgereift, d. h. mehrere Stunden lang der Einwirkung von Luft ausgesetzt, um einen oxidativen Abbau zu erreichen. Dadurch werden die Cellulosemoleküle auf einen kleinen Polymerisationsgrad gebracht. Anschließend wird die Alkalicellulose mit Schwefelkohlenstoff zur Reaktion gebracht. Bei dieser Xanthogenierung bildet sich aus der Cellulose ein Cellulosexanthogenat. Das Cellulosexanthogenat wird nachfolgend in einer wässrigen Flüssigkeit (verdünnte Natronlauge oder Wasser) gelöst. Diese Lösung ist die sogenannte Viskose. Die Viskose wird durch Lagerung bei etwa Umgebungstemperatur über mehrere Stunden nachgereift. Während dieser Zeit erfolgt neben anderen chemischen Änderungen eine Umverteilung der Xanthogenatgruppen entlang der Celluloseketten. Während der Nachreifezeit werden auch andere Verfahrensschritte wie Filtration und Entlüftung durchgeführt.

Zur Herstellung länglicher Elemente wie beispielsweise Fasern und Folien wird die nachgereifte Viskose über eine Düse in ein üblicherweise schwefelsaures Wasserbad extrudiert. In diesem Spinnbad koaguliert die Viskose. Einhergehend mit der Koagulation wird auch die Cellulose aus dem Cellulosexanthogenat regeneriert. Dieser Ausformprozess wird üblicherweise bei der Faserherstellung als Spinnen und bei der Folienherstellung als Gießen bezeichnet. Das regenerierte längliche Celluloseelement wird anschließend von Verunreinigungen freigewaschen und getrocknet.

In der Viskosetechnik ist es üblich, den Schwefelkohlenstoffgehalt der Viskose als die in der Xanthogenierung eingesetzte Schwefelkohlenstoffmenge, bezogen auf den Gewichtsanteil der Cellulose in der Alkalicellulose (% CS&sub2; auf CiA), auszudrücken. Zuweilen spricht man auch mit weniger Berechtigung von dem CS&sub2;- Gehalt, bezogen auf die Cellulose in der Viskose (% CS&sub2; auf CiV). Den Prozentgehalt der Alkalicellulose an Cellulose (% CiA) kann man gravimetrisch durch Versäuern, Waschen mit Wasser und Trocknen bestimmen. Den Prozentgehalt der Viskose an Cellulose (% CiV) kann man gravimetrisch durch Regenerierung in Schwefelsäure, Waschen mit Wasser und Trocknen bestimmen. Die Alkalinität der Alkalicellulose und der Viskose (% SiA bzw. % SiV) kann man titrimetrisch durch Rücktitration bestimmen, indem man das Analysengut zunächst mit einer bekannten Menge an Schwefelsäure versäuert und anschließend den Rest Schwefelsäure durch Titration gegen Natriumhydroxid bestimmt. So gemessene Alkalinitäten werden üblicherweise als der entsprechende prozentuelle Gewichtsanteil an Natriumhydroxid angegeben. Das Gewichtsverhältnis von Alkali- zu Celluloseanteil der Viskose bezeichnet man gemeinhin auch als das Alkaliverhältnis.

Alkalicellulose nennt man im allgemeinen Sprachgebrauch das Anlagerungsprodukt bzw. Addukt von Natriumhydroxid an Cellulose, das durch einen sogenannten Alkalisier- bzw. Mercerisierprozess erhalten wird, bei dem Cellulose mit wässriger Natronlauge behandelt wird.

Im industriellen Maßstab dient sogenannter Chemiezellstoff, der aus dem Holz von Bäumen gewonnen wird, oder sogenannter Linters, der aus sehr kurzen Baumwollfasern besteht, die als Nebenprodukt der Baumwollerzeugung anfallen und für die Verspinnung ungeeignet sind, als Ausgangsstoff.

Der Alkalisier- bzw. Mercerisierprozess findet bei heute angewendeten Verfahren unter Rühren, der in der wässrigen Natronlauge fein dispergierten Cellulose, statt: Der sogenannten Maischealkalisierung.

Dafür typische Reaktionsbedingungen sind:
- Konzentration der NaOH : 17-22 Gewichts%
- Temperatur : 40-55 °C, bei Linters bis 70 °C
- Verweilzeit : 15-60 Minuten
- Maische-Dichte : 3-5,5 Gewichts% Cellulose

Nach Beendigung der Maische-Alkalisierung wird die Alkalicellulose durch Abpressen auf sogenannten Alkalisierpressen, gegeneinanderlaufende Siebtrommeln, von der überschüssigen Natronlauge befreit. Unter den genannten Reaktionsbedingungen hat die Alkalicellulose im Allgemeinen die folgende Zusammensetzung:
- Cellulose-Gehalt (CiA) : ≥ 33-35 Gewichts%
- NaOH-Gehalt (SiA) : ≥ 16 Gewichts%
- Wassergehalt : 50-52 Gewichts%

Ein Nachteil dieses bekannten Verfahrens ist der hohe Bedarf an Natronlauge, die neben hohen Kosten auch eine nicht unerhebliche Umweltbelastung darstellt.

Sowohl die Reaktion der Cellulose mit der wässrigen Natronlauge zur Alkalicellulose, als auch die Derivatisierungsreaktion selbst, sind typische heterogene, chemische Reaktionen mit den Reaktanden wie Methylchlorid, Athylchlorid, Chloressigsäure und Schwefelkohlenstoff.

Zur Erreichung eines gleichmäßigen Substitutionsgrades ist es insbesondere von Bedeutung, dass die sich in dem hochgeordneten, kristallinen Bereich der Cellulosefasern befindenden Cellulosemoleküle sowohl für die Natronlauge während der Bildung der Alkalicellulose, als auch für die chemischen Agenzien der Derivatisierung, gut zugänglich sind.

Eine verbesserte Zugänglichkeit zu den Cellulosemolekülen erhält man durch die folgenden bereits bekannten Methoden:
- gute Verteilung der einzelnen Cellulosefasern in der Maische bei der Alkalisierung
- mit Hilfe eines Zusatzes kommerziell angebotener Additive, die im Grenzbereich Cellulose/Natronlauge bzw. Alkalicellulose/chemische Derivatisierungsagens wirken und die Zugänglichkeit verbessern
- Aktivierung, d.h. Öffnung der Struktur der Cellulosefasern vor der Alkalisierung durch Bestrahlung mit Elektronen, oder auch durch Behandlung mit Dampf (sog. Steam - Explosion) bzw. Ammoniak
- Schaffung einer möglichst großen Oberfläche der Alkalicellulose durch Shreddern vor der Derivatisierung
- Eine Grundvoraussetzung für den Ablauf einer gleichmäßigen Derivatisierungsreaktion ist allerdings nach wie vor die Aufweitung des Kristallgitters der im Zellstoff bzw. Linters befindlichen Cellulosefasern. Diese sogenannte native Cellulose besteht in den kristallinen Bereichen aus sogenannter Cellulose I, die sich nach Aufweitung des Kristallgitters in Cellulose II umwandelt, die nach der Regenerierung der Alkalicellulose erhalten wird.

Unter den Praxisbedingungen der Alkalisierung sind NaOH-Konzentrationen von 17- 22 Gewichts% in der Alkalisierlauge erforderlich, um unter den bereits erwähnten Reaktionsbedingungen eine komplette Umwandlung des Kristallgitters zu erzielen.

Der Nachweis der Umwandlung kann durch Raman-Spektroskopie oder Röntgendiffraktometrie erfolgen. Dies wurde von Schenzel K., Fischer S. in der Publikation "Cellulose 2001 ", S. 49, offenbart. Schenzel und Fischer haben eine Cellulose, sogenannter Chemie-Zellstoff oder Dissolving Pulp, mit einem Durschnittspolimerisationsgrad von 1.270, mit verschiedenen Natronlauge-Konzentrationen (0-16 Gewichts%) behandelt und dabei festgestellt, dass erst ab einer Konzentration von 14 Gewichts% eine nennenswerte Umwandlung von Cellulose I in Cellulose II stattfindet, die wie bereits erwähnt nach Regenerierung der Alkalicellulose röntgendiffraktometrisch nachgewiesen werden kann. Unter den bereits erwähnten typischen Reaktionsbedingungen arbeitet man allerdings in der Praxis mit NaOH-Konzentrationen in der Alkalisierung von 17-22Gewichts%.

Eine Absenkung dieser Konzentration auf ≤ 16 Gewichts% unter Praxisbedingungen ist erst nach entsprechender Aktivierung, d.h. Öffnung der Struktur der Cellulosefasern, möglich.

Dazu ist aus der Patentschrift DE 2 941 624 C2 ein Verfahren zur Herstellung von Viskosen aus Zellstoff bekannt, bei dem durch Bestrahlung des Zellstoffes eine Voraktivierung erreicht wird. Dabei wird beschrieben, dass es durch die Bestrahlung des Zellstoffes mit energiereichen Strahlen, vorzugsweise energiereichen Elektronenstrahlen, möglich ist, den NaOH-Gehalt der Alkalisierlauge abzusenken.

Die angewandte Strahlendosis wird im Bereich von 1-30 kGy so gewählt, dass der gewünschte Durchschnittspolymerisationsgrad nach der Alkalisierung vorliegt. Die Alkalisierung erfolgt mit einer NaOH-Lösung von unter 19 Gewichts%, vorzugsweise 16 Gewichts%.

Die Vorteile dieses Verfahrens bestehen darin, dass durch die Bestrahlung des Zellstoffes eine Voraktivierung bei gleichzeitiger Strukturauflockerung und eintretender Depolymerisation erfolgt. Dadurch wird die Alkalisierung bei niedrigeren Laugekonzentrationen gewährleistet, und die bis dahin angewandte Vorreife entfällt.

Die erhöhte Reaktivität einer so behandelten Cellulose äußert sich auch in einer Absenkung des Einsatzes von Schwefelkohlenstoff in der Xanthogenierung, als Zwischenschritt der Herstellung von Produkten nach dem sog. Viskoseverfahren, wie ebenfalls in dieser Patentschrift erwähnt.

Die US 2002/099203 A1 offenbart ein Verfahren zur Herstellung einer Alkalicellulose, die eine sehr gleichmäßige Verteilung von Alkali in der Alkalicellulose aufweist und eine hohe Schüttdichte aufweist. Darüber hinaus ermöglicht es die hohe Schüttdichte der Alkalicellulose, ein kleineres Reaktionsgefäß mit einer größeren Menge der Alkalicellulose in einem Veretherungsreaktionsschritt zu laden und dadurch einen Celluloseether mit sehr guter Löslichkeit herzustellen. Speziell wird pulverförmiger Zellstoff, der durch Schleifen von Pulpe zu einem Pulver erhalten wird, kontinuierlich einem Doppelwellenkneter zugeführt und mit einer wässrigen alkalischen Lösung gemischt, die gleichzeitig und kontinuierlich über dieselbe Einlassöffnung oder an einer anderen Stelle zugeführt wird. Nachdem sie innerhalb des Kneters gemischt und verdichtet wurden, wird das resultierende Produkt kontinuierlich aus einer Auslassöffnung ausgetragen. Die Zufuhrrate der Pulverpulpe wird durch eine Dosierzuführung gesteuert, um sie mit einer gewünschten Strömungsgeschwindigkeit zuzuführen. Die Zufuhrrate der wässrigen alkalischen Lösung wird durch eine Dosierpumpe gesteuert, um sie kontinuierlich mit einer Geschwindigkeit zuzuführen, die eine vorbestimmte Alkalikonzentration ergibt.

Eine mechanische Behandlung von vorher anderweitig behandelter Cellulose mit konventionellen Mühlen (Schlagwerk-, Kugel- und Schneidmühlen) zur Herstellung pulverförmiger Produkte wird in der DD 222 887 A1 offenbart.

Dabei wird faserförmige Cellulose durch geeignete Behandlung so versprödet, dass dadurch eine verbesserte Mahlbarkeit resultiert und damit Cellulosepulver mit vergrößertem Feinanteil und erhöhter Schüttdichte erhalten wird. Die Versprödung erfolgt hierbei durch Bestrahlung mit energiereicher Strahlung in Größenordnungen zwischen 10 und 200 kGy an faserförmigen Cellulosen unterschiedlicher Feuchte zwischen 0,5 bis 25 %. Des Weiteren können auch enzymatisch vorhydrolisierte faserförmige Cellulosen mittels Bestrahlung versprödet werden. Im Gegensatz zur vorliegenden Erfindung führt eine Mahlung von unbehandelten Cellulosen in konventionellen Mühlen (Schlagwerk-, Kugel- und Schneidemühlen) nicht zu pulverförmigen Produkten, wie in der DD 222 887 A1 ausdrücklich erwähnt wurde.

Die erhaltenen pulverförmigen Produkte können vorzugsweise im Bereich der Zellstoff- und Papierindustrie, der plastherstellenden Industrie, insbesondere als Filtrationsmaterialien und Katalysatorträger eingesetzt werden. Des Weiteren wird der Abfall des Durchschnittspolymerisationsgrades (DP) der Cellulose beschrieben, der von der Intensität der Mahlung und der Vorbehandlung der Cellulose abhängt.

In der EP1245 576 A1 wird eine Mahlung von Sulfitzellstoff mit verschiedenen für eine Nassmahlung geeignete Mühlen beschrieben. Die Mahlungen erfolgen in einer ≥ 5%igen wässrigen Cellulose-Suspension mit einem NaOH-Gehalt von 0,5
bis < 6,5%. Obwohl es mit dieser Methode möglich war, Teilchengrößen von ≤ 30 µm zu erzielen, hatte sich der kristalline Anteil, der bei unbehandelten Sulfitzellstoffen bei etwa 0,55 bis 0,65 liegt, nur auf ≤ 0,5 vermindert, wie durch NMR-Analyse nachgewiesen wurde.

Ziel der EP1245 576 A1 ist die Auflösung der Cellulose nach Aufstockung der NaOH-Konzentration auf 6,5 - 11%.

In der DE 600 21 963 T2 wird ein Verfahren zur Herstellung von Celluloseethern beschrieben.

Baumwoll-Linters, als auch Holzschliff werden mit Hilfe eines Vertikalwalzen-Mahlwerks zu pulverförmigem Zellstoff mit einer mittleren Teilchengröße von 20 bis 300 µm verarbeitet. Messungen der Kristallinität wurden nicht vorgenommen, so dass die Zerstörung der kristallinen Struktur nicht Ziel dieser Vorbehandlung war.

Als weitere pulverförmige Cellulosen, die als Zusätze in der Lebensmittel- und pharmazeutischen Industrie dienen, sind sogenannte mikrokristalline Cellulosen, als auch sogenannte Pulvercellulosen bekannt. Pulvercellulosen erhält man durch Mahlung von Zellstoffen aus natürlichen Cellulosen und die mikrokristallinen Cellulosen (MCC) durch saure Hydrolyse von Zellstoffen.

In den Dissertationen http://sundoc.bibliothek.uni-halle.de/dissonline/05/06H028/t5.pdf und http://sundoc.bibliothek.uni-halle.de/dissonline/03/03H149/t8.pdf der Universität Halle wurden diese Produkte charakterisiert:

| | PC (Pulvercellulose) | MCC (mikrokristalline Cellulose) |
|---|---|---|
| Durchschnittspolymerisationsgrad (DP): | 120-300 | 600-1 250 |
| Mittlere Teilchengröße (d50): | 40-200 µm | 20-185 µm |
| Kristallinitätsindex (Kl): | 0,3 | 0,7/0,71 |

Erwartungsgemäß steigt der Kristallinitätsindex (KI) bei MCC im Vergleich zum Ausgangszellstoff (ca. 0,6) auf 0,7/0,71 (Dissertation von Elisabeth J. Storz, Uni Bonn, 2003: Untersuchung funktioneller Parameter pharmazeutischer Hilfsstoffe mittels Nahinfrarot Spektroskopie(NIRS)) an, während durch die Mahlung eine Halbierung erfolgt, ohne dass es zu einer völligen Zerstörung der kristallinen Struktur kommt.

Der Erfindung liegt daher die Aufgabe zugrunde, die Nachteile des Standes der Technik zu vermeiden und bei unbehandelter nativer Cellulose I, d.h. letztlich den Einzelfasern aus denen die Cellulose besteht, die NaOH-Konzentration in der Alkalisierlauge unter den im Stand der Technik üblichen Wert von 17-22 Gewichts% zu reduzieren. Hierdurch soll eine Alkalicellulose mit einem möglichst geringen Gehalt an freiem Alkali erhalten werden.

Diese Aufgabe wird durch ein Verfahren zur Herstellung von Alkalicellulose aus Cellulose bzw. Zellstoff mit den Merkmalen der Ansprüche 1 und 2 gelöst. Vorteilhafte Ausführungsformen und Weiterbildungen der Erfindung werden in den Unteransprüchen beschrieben.

Erfindungsgemäß soll durch mechanische Voraktivierung der unbehandelten nativen Cellulose die Konzentration der Alkalisierlauge insbesondere auf einen Bereich von 2-10 Gewichts% NaOH abgesenkt werden.

Dazu wird erfindungsgemäß ein Verfahren zur Herstellung von Alkalicellulose aus Zellstoff bzw. Cellulose zur Verfügung gestellt, welches folgende Schritte aufweist:
- Aktivieren der Cellulose I im lufttrockenen Zustand durch Zerkleinern auf eine mittlere Teilchengröße (d50) < 100 µm mit einer Mahlgarnitur, die derart ausgebildet ist, dass die Kristallstruktur der Cellulose I zerstört wird, wodurch Cellulose II bzw. amorphe Cellulose als Vorstufe der Cellulose II erhalten wird, und
- Alkalisierung der Cellulose bzw. amorphen Cellulose als Vorstufe der Cellulose II mit einer Natronlauge einer Konzentration < 12 Gewichts%, vorzugsweise 6 Gewichts%.

Des Weiteren wird erfindungsgemäß ein Verfahren zur Herstellung von Alkalicellulose aus Zellstoff bzw. Cellulose aus einer Maische, die die Cellulose und Natronlauge aufweist, zur Verfügung gestellt, welches folgende Schritte aufweist:
- Bereitstellen einer Maische, die die Cellulose I und Natronlauge mit einer Konzentration < 12 Gewichts%, vorzugsweise < 6 Gewichts%, aufweist,
- Aktivieren der Maische durch Zerkleinern auf eine mittlere Teilchengröße (d50) < 100 µm mit einer Mahlgarnitur, die derart ausgebildet ist, dass die Kristallstruktur der Cellulose I zerstört wird, wodurch Cellulose II bzw. amorphe Cellulose als Vorstufe der Cellulose II erhalten wird, und
- Filtrieren oder Zentrifugieren der Alkalizellulose.

Diese erfindungsgemäßen Verfahrensbedingungen ermöglichen aufgrund einer geringeren Konzentration an Natronlauge eine hohe Einsparung an der benötigten Natronlauge und führen zu einem deutlich niedrigeren Gehalt an freiem Alkali nach der Alkalisierung. Des Weiteren führen diese Verfahrensbedingungen zu einer verbesserten Reaktivität, d.h. einer besseren Zugänglichkeit der Cellulosemoleküle in den hochgeordneten, kristallinen Bereichen.

Damit steht zum Einen, weniger überschüssiges, freies Natriumhydroxid für Nebenreaktionen der Derivatisierung zur Verfügung, und zum Anderen, verbunden durch die verbesserte Zugänglichkeit und Öffnung der Kristallinen Bereiche, ist ein gleichmäßigerer Substitutionsgrad des Cellulosederivates über alle Molekulargewichte hinweg möglich.

Dadurch können aus dieser Lösung Fasern oder Filme ausgeformt werden (Viskoseprozess).

Zusammenfassend ist es dadurch möglich, mit einem geringeren Einsatz von Schwefelkohlenstoff den Substitutionsgrad abzusenken und den Natriumhydroxidgehalt der Lösung bzw. der Viskose ebenfalls deutlich zu reduzieren. Des Weiteren kann Schwefelkohlenstoff durch den geringeren Substitutionsgrad und den Rückgang von Nebenreaktionen des Schwefelkohlenstoffs mit der Natronlauge eingespart werden. Die Einsparungen an Materialkosten des Viskoseprozesses, insbesondere an NaOH und Schwefelsäure sind bedeutend.

Im Endergebnis kommt es dadurch auch zu einer Verminderung der Umweltbelastungen durch geringere Emissionen der Abluft und des Abwassers.

Auch eine Kombination der beiden erfindungsgemäßen Verfahren ist möglich.

Vorteilhafterweise erfolgt das Zerkleinern der Cellulose innerhalb von maximal 30 Minuten, vorzugsweise maximal 15 Minuten. Aufgrund eines hohen Energieeintrags beim Zerkleinern der Cellulose wird nur eine geringe Zeitspanne zum Zerkleinern der Cellulose benötigt.

Aufgrund der Zerkleinerung und des damit verbundenen hohen Energieeintrags kann eine Verweilzeit der Cellulose in der Natronlauge von ≤ 1 Stunde, vorzugsweise von 30 Minuten erreicht werden.

Vorteilhafterweise führt eine Mahlgarnitur zum Zerkleinern der Cellulose oszillierende Schwingungen aus. Hierbei können oszillierende Schwingungen in einem bevorzugten Frequenzband zwischen 500 bis 2000 Hz erzeugt werden. Derartige Schwingungen können durch die sogenannte Schwingungsamplitude beschrieben werden.

Bevorzugterweise werden die Schwingungen in einem Frequenzband zwischen 700 bis 1400 Hz, besonders bevorzugt zwischen 950 bis 1050 Hz erzeugt. Hierbei können Kreisschwingungen erzeugt werden. Vorstellbar sind auch Schwingungsformen die z.B. auf einem Oval oder einer Ellipse etc. beruhen. Typische Schwingungsamplituden liegen im Bereich von 5 bis 20 mm, bevorzugt im Bereich zwischen 8 und 16 mm, besonders bevorzugt zwischen 10 und 14mm.

Vorteilhafterweise erfolgt der Energieeintrag durch hohe Schlag- und Reibkräfte. Dadurch kann der Energieeintrag in kürzester Zeit erfolgen. Zugleich werden die Cellulosefasern in kürzester Zeit zerkleinert. Diese Zerkleinerung ist in erster Linie auf diese Schlag- und Reibkräfte zurückzuführen. Des Weiteren lässt sich damit ein optimaler Durchschnittspolymerisationsgrad einstellen. Um die kristalline Struktur der nativen Cellulose, die sogenannte Cellulose I, zu zerstören, sind neben den Schlagkräften höhere Reibkräfte als die bei einer Kugelmühle erzielbaren Reibkräfte erforderlich.

Des Weiteren ist der Energieeintrag auch durch hohe Druck- Scher- und Reibungskräfte vorstellbar.

Aufgrund der oszillierenden Bewegung der Mahlgarnitur bzw. Mahlkörper
und den daraus resultierenden extremen Schlag- und Reibkräften bzw. Druck- Scher- und Reibungskräften, die auf die Cellulose einwirken, kann der Energieeintrag in kürzester Zeit erfolgen. Zugleich werden die Cellulosefasern in kürzester Zeit zerkleinert und die kristalline Struktur zerstört. Des Weiteren lässt sich auch damit ein optimaler Durchschnittspolymerisationsgrad einstellen.

Die Schlag- und Reibkräfte können dabei durch Schwingungen in einem bevorzugten Frequenzband zwischen 500 bis 2000 Hz erzeugt werden. Bevorzugterweise werden die Schwingungen in einem Frequenzband zwischen 700 bis 1400 Hz, besonders bevorzugt zwischen 950 bis 1050 Hz erzeugt.

Alle zum Zerkleinern auf die Cellulose einwirkenden Kräfte sind auch in anderen Kombinationen vorstellbar.

Vorteilhafterweise kann die Steuerung des Verhältnisses zwischen Schlag- und Reibkräften bzw. Druck-, Scher- und Reibungskräften hauptsächlich durch die Parameter
- Mahlkörper (Anzahl, Größe, Material, Härte, Masse, etc.);
- Drehzahl bzw, Frequenz; und
- Schwingkreisdurchmesser bzw. die Schwingkreisamplitude erfolgen. Dabei entspricht die doppelte Schwingkreisamplitude generell dem Schwingkreisdurchmesser

Hierbei können die Mahlkörper entsprechend aufgrund Anzahl, Größe, Gewicht und Material gewählt werden. Dabei sollte das spezifische gewicht des Mahlkörpers im Bereich von 2,6 g/cm³ bis 8 g/cm³ liegen, besonders bevorzugt zwischen 2,8 g/cm³ und 7,7 g/cm³ liegen. Die Rockwell Härte (HRC) sollte hier im Bereich zwischen 44 HRC und 72 HRC liegen, besonders bevorzugt zwischen 50 HRC und 70 HRC liegen. Durch die Drehzahl wird auch die Schwingungsanzahl bestimmt. Denkbar ist auch eine Entkopplung der Drehzahl von der Schwingungsanzahl.

Die extremen Schlag- und Reibkräfte resultieren vorteilhafterweise aus einer Linienlast zwischen Mahlkörpern, die auf die Cellulose einwirken.
Die extremen Druck- und Scherkräfte können auch aus einer auf die Cellulose einwirkenden Linienlast zwischen Mahlkörpern resultieren.

Die extremen Schlag- und Reibkräfte können auch aus einer Punktlast zwischen Mahlkörpern, die auf die Cellulose einwirken, resultieren.

Des Weiteren können die extremen Druck- und Scherkräfte auch aus einer auf die Cellulose einwirkenden Punktlast zwischen Mahlkörpern resultieren.
Schließlich sind die auf die Cellulose einwirkenden Kräfte auch in weiteren Kombinationen vorstellbar.

Um die Cellulose zu zerkleinern und die Kristallstruktur der nativen Cellulose, der so genannten Cellulose I, in kürzester Zeit zu zerstören, ist ein hoher Energieeintrag in Form von Scher-, Reib- und Druckkräften neben den üblichen Schlagkräften erforderlich. Dazu sind vorteilhafterweise Schwingmühlen geeignet, z.B. Stab- oder Scheibenschwingmühlen. Um eine horizontale Achse schwingende Stabmühlen sollten die folgenden Bedingungen erfüllen:
- Schwingungen mit 17 sec⁻¹ ≙ 1 020 Schwingungen pro Minute
- Amplitude der Schwingung 6 bis 10 mm
- Mahlkörper: Stangenabschnitte, sogenannte Cylpebs, 18 mm breit und ca. 300 mm lang.

Die für die Vorsuche ausgesuchte Scheibenschwingmühle der Firma Retsch (RS 100), ausgestattet mit Mahlgarnituren (zylindrisches Gefäß, sowie Scheiben als Mahlkörper) aus Edelstahl bzw. Achat, übt insbesondere Scher-, Reib- und Druckkräfte aus. Die Mühle schwingt um eine vertikale Achse mit Schwingungen von 700 bzw. 1 400 pro Minute. Die Amplitude der Schwingung sollte größer 10 mm sein.

Unter den vorgenannten Bedingungen erhält man in ≤ 30 Minuten eine sogenannte röntgenamorphe Cellulose mit einem d₅₀-Wert von < 100 µm

Um den Verschleiß der Mahlkörper zu reduzieren, werden vorteilhafterweise Mahlkörper aus Edelstahl und Auskleidungen aus Edelstahlverwendet. Der Einsatz von Mahlkörpern aus anderen abriebsfesten Materialien ist ebenfalls denkbar. Des Weiteren ist die Verwendung von einem Keramikmaterial oder Achat bzw. einem Verbundwerkstoff ebenfalls vorstellbar. Schließlich ist auch eine Kombination der unterschiedlichsten Materialen denkbar.

Vorteilhafterweise erfolgt die Alkalisierung der Cellulose mit einer Natronlauge mit einer Konzentration von 2 bis 11 Gewichts%, bevorzugt 2 bis 8 Gewichts%, bevorzugt 2 bis 5 Gewichts%. Dadurch kann der Verbrauch an Natronlauge weiter reduziert werden. Die Einsparungen an Materialkosten des Viskoseprozesses, insbesondere an NaOH und Schwefelsäure können nochmals erhöht werden.

Der Energieeintrag erfolgt vorteilhafterweise in eine Maische, die einen Zellstoffanteil > 5 Gewichts% und/oder < 10 Gewichts% aufweist. Dadurch kann ein besonders homogenes Gemisch hergestellt werden, das mit einem Minimum an NaOH und Schwefelsäure zu Alkalicellulose verarbeitet werden kann.

Vorteilhafterweise wird die Cellulose auf eine mittlere Endfeinheit von 1 bis 100 µm, vorzugsweise 10 bis 90 µm zerkleinert. Dadurch lässt sich auch am schnellsten ein optimaler Durchschnittspolymerisationsgrad einstellen. Dadurch kann der Verbrauch an Natronlauge nochmals reduziert werden.

Vorteilhafterweise weist die Alkalicellulose, die nach der Regenerierung aus einer Kristallstruktur Cellulose II bzw. aus amorpher Cellulose als Vorstufe zu Cellulose II hergestellt ist, einen Gehalt an Alkali < 11 %NaOH oder SiA% bei einem Cellulosegehalt von 32-34 CiA% auf, der durch die Alkalisierung mit Natronlauge einer Konzentration < 12 Gewichts% entsteht.

Vorteilhafterweise wird die Alkalicellulose zum Herstellen von Cellulosexanthogenat verwendet.

### Kurze Beschreibung der Figur

Nachfolgend wird die Erfindung anhand eines Ausführungsbeispiels zusammen mit einer beigefügten Zeichnung erläutert. Dazu zeigt:

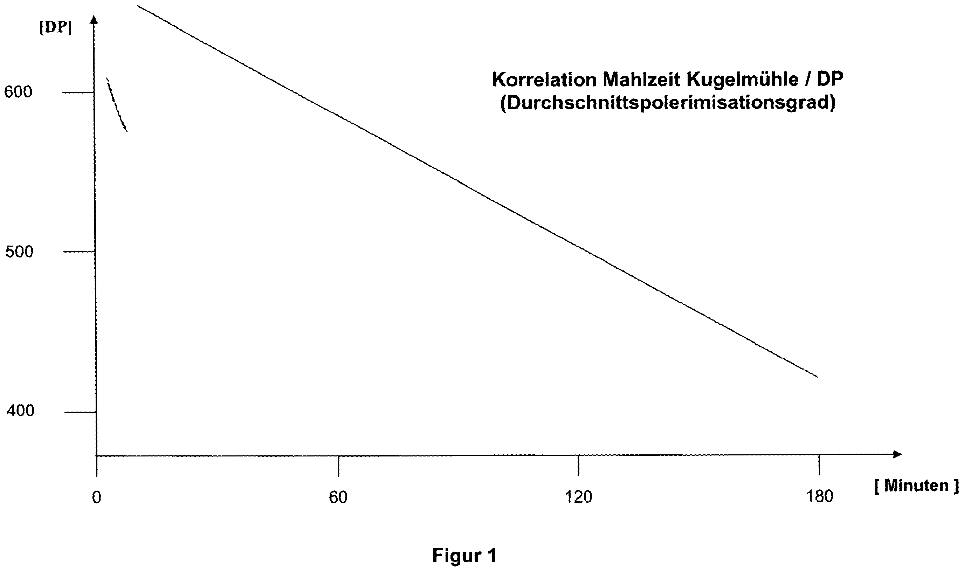

Figur 1 die Korrelation von Mahlzeit einer Kugelmühle in Abhängigkeit vom Energieeintrag und dem Durchschnittspolerimisationsgrad (DP).

### Durchführung der Versuche

In der Veröffentlichung von S. Fischer et al.: "Applications of FT Raman Spectroscopy and Microspectroscopy Characterizing Cellulose and Cellulosic Biomaterials", Makromolekulares Symposium 2005, Band 223, Seite 41-56, stellten S. Fischer et al. durch intensive Mahlung, die mehrere Stunden Zeitaufwand beanspruchte, eine amorphe Cellulose her, die zur Kalibrierung einer Messmethode diente, um mit Hilfe der FT-Raman Spektroskopie und Mikrospektroskopie den Grad der Kristallinität von Cellulosen unterschiedlicher Herkunft zu bestimmen.

Eigene Versuche mit lufttrockenem, vorzerkleinertem Chemiezellstoff (Eukalyptus Sulfit, DP 666) in einer Bond-Mühle mit Stahlmahlkörpern sowie mit einer Porzellan-Trommelmühle zeigten mit zunehmender Mahldauer eine Zunahme der Amorphisierung der Cellulose. Jedoch war beispielsweise mit der Porzellan-Trommelmühle noch nach 10 Stunden Mahlzeit Cellulose I röntgendiffraktometrisch nachweisbar. Der in der DD 222 887 A1 erwähnte Durchschnittspolymerisationsgrad-Abbau der Cellulose während der Mahlung, konnte bei diesen Versuchen bestätigt werden. Bei Mahlungen mit der Bond-Mühle mit Stahlkörpern fiel der DP des Ausgangszellstoffes von 666 innerhalb von 3 Stunden Mahlzeit bereits auf 416 ab.

Mit einer Scheibenschwingmühle Typ RS 100 der Firma Retsch wurden sowohl mit einer Edelstahlmahlgarnitur als auch mit einer Achatmahlgarnitur Mahlversuche unter unterschiedlichen Bedingungen durchgeführt, um einerseits die Struktur der Cellulose I zu zerstören, und andererseits, bereits während der Mahlung, eine Umwandlung der Cellulose I in Cellulose II herbeizuführen.

### Detaillierte Beschreibung der Erfindung

Sowohl die Mahlung von lufttrockenem Eukalyptuszellstoff, als auch einer 6 Gewichts%-igen Maische dieses Zellstoffs in Wasser, führten bei einer Mahldauer von 1 Stunde mit einem Achateinsatz und Achatschwingkörpern bei 700 Schwingungen pro Minute zu einer weitestgehenden Zerstörung der Cellulosefasern, ohne dass jedoch Veränderungen in der Kristallstruktur der Cellulose I röntgendiffraktometrisch zu erkennen waren.

Erst mit einer Zellstoffmaische von 6% in 3-11%-iger Natronlauge kam es unter den folgenden Versuchsbedingungen zu einer weitestgehenden Zerstörung der Struktur der Cellulose bei gleichzeitiger Bildung von Cellulose II bzw. von amorpher Cellulose als Vorstufe der Cellulose II, die nach Regenerierung der so hergestellten Alkalicellulose nachgewiesen werden konnte.

Eine Wiederholung der erwähnten Mahlung von lufttrockenem Eukalyptoszellstoff, als auch einer 6-gewichtsprozentigen Maische dieses Zellstoffs in Wasser, führten bei einer Mahldauer von 30 Minuten mit einem Edelstahleinsatz und Edelstahlschwingkörpern bei 700 Schwingungen pro Minute auch zu einer Zerstörung der kristallinen Struktur der Cellulosefasern, so dass röntgendiffraktometrisch keine Cellulose I mehr erkennbar war.

Die folgende Tabelle fasst 6 Versuchsbeispiele zusammen:

| | Beispiel 1 | Beispiel 2 | Beispiel 3 | Beispiel 4 | Beispiel 5 | Beispiel 6 |
|---|---|---|---|---|---|---|
| Mahlkörper: | Edelstahl | Achat | Edelstahl | Edelstahl | Edelstahl | Edelstahl |
| Zellstoff-Maische in % | 6 | 6 | 6 | 6 | 6 | 100(+) |
| NaOH-Konz. in % | 8 | 8 | 6 | 6 | 4 | 0 |
| Mahldauer in min. | 20 | 60 | 10 | 30 | 30 | 30 |
| Schwingungen pro min. | 700 | 700 | 1,400 | 700 | 700 | 700 |

| | | | | | | |
|---|---|---|---|---|---|---|
| (+) lufttrockene Cellulose | | | | | | |

Die Probe aus Beispiel 6 wurde nach der Mahlung mit 4%iger Natronlauge behandelt und in Alkalicellulose ungewandelt.

Die Messung der Kristallstruktur erfolgte durch Röntgendiffraktometrie bzw. FT-Ramen-Spektroskopie nach Regenerierung der Proben.

Durch die Mahlung einer luftgetrockneten Cellulose (Zellstoff) mit anschließender Alkalisierung zur Herstellung von Alkalicellulose sowie einer entsprechenden Behandlung von Zellstoff-Maischen mit einem Gehalt von 4 bis 8 Gewichts% NaOH, war es möglich, eine Alkalicellulose herzustellen, bei der die Umwandlung der Cellulose I in Cellulose II bzw. in amorphe Cellulose, als Vorstufe der Cellulose II bei NaOH -Konzentrationen, erfolgte, die sehr deutlich unter der bisher ermittelten Konzentration von 14 Gewichts% für die erforderliche Unwandlung der Kristallstruktur lagen.

Dafür ist ein geeigneter Energieeintrag bei der Mahlung unerlässlich, der bei den oben aufgeführten Versuchen mit einer Schwingkörpermühle RS 100 der Fa. Retsch erfolgte. Dabei weisen die Mahlkörper aus Edelstahl ein spezifisches Gewicht von 7,7 g/cm³ und eine Rockwell Härte von 44 HRC auf. Die Mahlkörper aus Achat weisen ein spezifisches Gewicht von 2,8 g/cm³ und eine Rockwell Härte von 72 HRC auf. Dabei sollte das einheitenlose Produkt aus spezifischem Gewicht (g/cm³) und Rockwell Härte (HRC) größer oder gleich 200, bevorzugt größer oder gleich 300 sein. Des Weiteren muss der Energieeintrag hauptsächlich als Schlag- und Reibkräfte erfolgen, aus dem eine hohe Reibungskraft resultiert und die Cellulose I fein "zerupft" und mahlt. Eine Endfeinheit mit einem (d50)-Wert von < 100 µm wurde hierbei erreicht.

Essentiell für dieses Verfahren ist somit die Auslösung von hohen Schlag- und Reibkräften. Hierbei ist der Effekt mit Edelstahl besser als mit Achat. Bei der Scheibenschwingmühle handelst es sich um eine spezielle Ausführungsform einer Schwingmühle, die bislang nur im kleineren Labor- bzw. Technikumsmaßstab Anwendung findet.

Das Verhältnis der Schlagkräfte zu den Reibkräften wird hauptsächlich durch die folgenden Parameter gesteuert:
- Auswahl der Mahlkörper
- Drehzahl
- Schwingkreisdurchmesser

Die so hergestellte Alkalicellulose enthält aufgrund der sehr niedrigen NaOH-Gehalte während der Alkalisierung einen möglichst geringen Anteil an freiem Alkali, der für störende Nebenreaktionen während der Derivatisierung in betracht gezogen werden muss.

Die verbesserte Zugänglichkeit der Cellulose Moleküle für die Agenzien der Derivatisierung führt außerdem zu einer Vergleichmäßigung des Substitutionsgrades der Cellulosederivate.

Eine Weiterverarbeitung der in Maischeform vorliegenden Alkalicellulose unter Praxisbedingungen ist auf unterschiedliche Weise möglich:
- Da handels- und praxisübliche Alkalisierpressen wegen der Feinheit der Cellulosepartikel nicht angewendet werden können, ist eine Abtrennung der überschüssigen Alkalisierlauge mit geeigneten Zentrifugen zu empfehlen, bevor die Alkalicellulose die weiteren Verfahrensschritte durchläuft.
- Bei NaOH-Konzentrationen ≤ 4 Gewichts% wäre wegen der verbesserten Zugänglichkeit der Cellulosemoleküle und einem günstigen Verhältnis von Cellulose zu NaOH für die Derivatisierung eine Derivatisierung, beispielsweise mit Schwefelkohlenstoff beim Viskoseprozess, in situ ohne Isolierung der Alkalicellulose, denkbar. Allerdings muss dann der für die Derivatisierung erforderliche DP (Durchschnittspolerimisationsgrad) der Cellulose durch die Mahlung und den DP-Abbau während der Alkalisierung eingestellt werden.

Figur 1 zeigt die Korrelation von der Mahlzeit einer Kugelmühle in Abhängigkeit vom Energieeintrag und dem Durchschnittspolymerisationsgrad. Hierbei wird die lineare Abhängigkeit vom Energieeintrag und dem Durchschnittspolymerisationsgrad gezeigt. Im Gegensatz dazu folgt die Abhängigkeit des Energieeintrags bei einer Strahlenbehandlung (Dosis) von Cellulose bzw. Zellstoff einer Exponentialfunktion.

## Patentansprüche

1. Verfahren zur Herstellung einer für Derivatisierungsreaktionen geeigneten Alkalicellulose aus unbehandelter Cellulose I, **gekennzeichnet durch** folgende Schritte:
a) Aktivieren der Cellulose I im lufttrockenen Zustand durch Zerkleinern auf eine mittlere Teilchengröße (d50) < 100 µm mit einer Mahlgarnitur, die derart ausgebildet ist, dass die Kristallstruktur der Cellulose I zerstört wird, wodurch Cellulose II bzw. amorphe Cellulose als Vorstufe der Cellulose II erhalten wird, und
b) Alkalisieren der Cellulose II bzw. amorphen Cellulose als Vorstufe der Cellulose II mit einer Natronlauge einer Konzentration < 12 Gewichts%, vorzugsweise < 6 Gewichts%.

2. Verfahren zur Herstellung einer für Derivatisierungsreaktionen geeigneten Alkalicellulose aus unbehandelter Cellulose I, **gekennzeichnet durch** folgende Schritte:
a) Bereitstellen einer Maische, die die Cellulose I und Natronlauge mit einer Konzentration < 12 Gewichts%, vorzugsweise < 6 Gewichts%, aufweist,
b) Aktivieren der Maische durch Zerkleinern auf eine mittlere Teilchengröße (d50) < 100 µm mit einer Mahlgarnitur, die derart ausgebildet ist, dass die Kristallstruktur der Cellulose I zerstört wird, wodurch Cellulose II bzw. amorphe Cellulose als Vorstufe der Cellulose II erhalten wird, und
c) Filtrieren oder Zentrifugieren der Alkalizellulose.

3. Verfahren zur Herstellung von Alkalicellulose nach Anspruch 1 oder 2, **dadurch gekennzeichnet, dass** das Zerkleinern der Cellulose innerhalb von maximal 30 Minuten, vorzugsweise maximal 15 Minuten erfolgt.

4. Verfahren zur Herstellung von Alkalicellulose nach einem der vorhergehenden Ansprüche, **dadurch gekennzeichnet, dass** die Verweilzeit der Cellulose in der Natronlauge ≤ 1 Stunde, vorzugsweise 30 Minuten beträgt.

5. Verfahren zur Herstellung von Alkalicellulose nach einem der vorherigen Ansprüche, **dadurch gekennzeichnet, dass** eine Mahlgarnitur zum Zerkleinern der Cellulose Schlag- und Reibkräfte ausführt.

6. Verfahren zur Herstellung von Alkalicellulose nach einem der Ansprüche 1 bis 4, **dadurch gekennzeichnet, dass** eine Mahlgarnitur zum Zerkleinern der Cellulose Druck-, Scher- und Reibungskräfte ausführt.

7. Verfahren zur Herstellung von Alkalicellulose nach einem der Ansprüche 5 oder 6, **dadurch gekennzeichnet, dass** die Mahlgarnitur zum Zerkleinern der Cellulose oszillierende Schwingungen, vorzugsweise Kreisschwingungen, ausführt.

8. Verfahren zur Herstellung von Alkalicellulose nach einem der Ansprüche 5 bis 7, **dadurch gekennzeichnet, dass** die Steuerung des Verhältnisses zwischen Schlag- und Reibkräften bzw. Druck-, Scher- und Reibungskräften die Parameter:
• Auswahl der Mahlkörper;
• Drehzahl bzw. Frequenz; und
• Schwingkreisdurchmesser bzw. Schwingkreisamplitude
aufweist.

9. Verfahren zur Herstellung von Alkalicellulose nach einem der vorherigen Ansprüche, **dadurch gekennzeichnet, dass** ein Energieeintrag in die Cellulose durch eine Mahlgarnitur zum Zerkleinern der Cellulose mittels Schlag- und Reibkräften bzw. Druck-, Scher- und Reibungskräften mit einer Frequenz von 500 Hz bis 2000 Hz und einer Schwingungsamplitude von 5 mm bis 20 mm erfolgt.

10. Verfahren zur Herstellung von Alkalicellulose nach einem der Ansprüche 5 bis 9, **dadurch gekennzeichnet, dass** die Mahlgarnitur eine Schwingmühle, eine Scheibenschwingmühle oder eine Stabmühle ist.

11. Verfahren zur Herstellung von Alkalicellulose nach einem der vorhergehenden Ansprüche, **dadurch gekennzeichnet, dass** das Zerkleinern mit einem abriebsfesten Mahlkörper und einer abriebsfesten Auskleidung, vorzugsweise aus Edelstahl erfolgt.

12. Verfahren zur Herstellung von Alkalicellulose nach einem der vorhergehenden Ansprüche, **dadurch gekennzeichnet, dass** die Natronlauge mit einer Konzentration von 2 bis 11 Gewichts%, bevorzugt 2 bis 8 Gewichts%, besonders bevorzugt 2 bis 5 Gewichts%, vorgesehen ist.

13. Verfahren zur Herstellung von Alkalicellulose nach einem der Ansprüche 2 bis 12, **dadurch gekennzeichnet, dass** die Maische einen Zellstoffanteil > 5 Gewichts% und/oder < 10 Gewichts% aufweist.

## Claims

1. A process for manufacturing of an alkali cellulose suitable for derivatization reactions from untreated cellulose I, **characterized by** the following steps:
a) Activation of an air-dried cellulose I by grinding on a medium particle size (d50)<100 micron in such a way, that cellulose II or amorphous cellulose as a precursor of cellulose II is obtained, and
b) Alkalization of cellulose II or amorphous cellulose as a precursor of cellulose II with a sodium hydroxide solution having a concentration of <12 weight %, preferably < 6 weight %.

2. A process for manufacturing of an alkali cellulose suitable for derivatization reactions from untreated cellulose I, **characterized by** the following steps:
a) Providing a slurry of cellulose I in aqueous sodium hydroxide having a concentration of<12 weight %, preferably < 6 weight %,
b) Activation of the slurry by grinding on a medium particle size (d50)<100 micron with a grinding device in such a way that cellulose II or amorphous cellulose as a precursor of cellulose II is obtained, and
c) Filtration or centrifugation of the alkali cellulose.

3. The process for manufacturing of an alkali cellulose according to claim 1 or 2 **characterized by** the fact that the grinding of the cellulose takes place within 30 minutes, preferably 15 minutes.

4. The process of manufacturing of an alkali cellulose according to one of the preceding claims, **characterized by** the fact that the residence time of cellulose in the sodium hydroxide solution is equal or less than 1 hour, preferably 30 minutes.

5. The process of manufacturing of an alkali cellulose according to one of the preceding claims, **characterized by** the fact that the grinding device produces stroke and friction forces to crush the cellulose.

6. The process of manufacturing of an alkali cellulose according to claims 1 to 4, **characterized by** the fact that the grinding device produces pressure, friction and shear forces to crush the cellulose.

7. The process of manufacturing of an alkali cellulose according to claims 5 or 6, **characterized by** the fact that the grinding equipment generates oscillating vibrations, preferably circular vibrations, to crush the cellulose.

8. The process for manufacturing of an alkali cellulose according to claims 5 to 7, **characterized by** the fact that the control of the relationship between the stroke and friction forces or the pressure, shear and friction forces comprises the following parameters:
• Selection of grinding media
• Number of revolutions or frequency; and
• Oscillating circuit, diameter or amplitude.

9. The process for manufacturing of an alkali cellulose according to one of the preceding claims, **characterized by** the fact that the energy of crushing the cellulose is applied by a grinding device by means of stroke and friction forces or pressure, friction and shear forces with a frequency of 500Hz to 2000Hz and an oscillating amplitude of 5 to 20 mm.

10. The process for manufacturing of an alkali cellulose according to claims 5 to 9, **characterized by** the fact that the grinding equipment is a vibrating mill, a vibrating disc mill or a rod mill.

11. The process for manufacturing of an alkali cellulose according to the preceding claims, **characterized by** the fact that the crushing takes place with abrasion resistant grinding media or beads and an abrasion resistant lining of the mill, preferably stainless steel.

12. The process for manufacturing of an alkali cellulose according to the preceding claims, **characterized by** the fact that the sodium hydroxide solution has a concentration of 2 to 11 weight%, preferably 2 to 8 weight%, preferably particularly from 2 to 5 weight%.

13. The process for manufacturing of an alkali cellulose according to the claims 2 to 12, **characterized by** the fact that the slurry has a cellulose concentration of >5 weight% and /or <10 weight%.

## Revendications

1. Procédé pour la production de cellulose alcaline adaptée à des réactions de formation de dérivés à partir de cellulose 1 non-traitée, **caractérisé par** les étapes suivantes :
a) activation de la cellulose I à l'état sec à l'air par broyage à une taille moyenne de particules (d50) < 100 µm au moyen d'une garniture de broyage conçue de sorte à détruire la structure cristalline de la cellulose I, permettant d'obtenir de la cellulose II ou de la cellulose amorphe en tant que précurseur de la cellulose II, et
b) alcalisation de la cellulose II ou de la cellulose amorphe en tant que précurseur de la cellulose II au moyen de soude caustique de concentration < 12% en poids, de façon préférentielle < 6% en poids.

2. Procédé pour la production de cellulose alcaline adaptée à des réactions de formation de dérivés à partir de cellulose I non-traitée, **caractérisé par** les étapes suivantes :
a) préparation d'un moût qui contient la cellulose I et la soude caustique avec une concentration < 12% en poids, de façon préférentielle < 6% en poids,
b) activation du moût par broyage à une taille moyenne de particules (d50) < 100 µm au moyen d'une garniture de broyage conçue de sorte à détruire la structure cristalline de la cellulose I, permettant d'obtenir de la cellulose II ou de la cellulose amorphe en tant que précurseur de la cellulose II, et
c) filtration ou centrifugation de la cellulose alcaline.

3. Procédé pour la production de cellulose alcaline selon la Revendication 1 ou 2, **caractérisé en ce que** le broyage de la cellule est réalisé en 30 minutes maximum, de préférence en 15 minutes maximum.

4. Procédé pour la production de cellulose alcaline selon l'une quelconque des Revendications précédentes, **caractérisé en ce que** le temps de séjour de la cellulose dans la soude caustique est ≤ 1 heure, de façon préférentielle ≤ 30 minutes.

5. Procédé pour la production de cellulose alcaline selon l'une quelconque des Revendications précédentes, **caractérisé en ce que** la garniture de broyage pour le broyage de la cellulose exerce une force de choc et de friction.

6. Procédé pour la production de cellulose alcaline selon l'une quelconque des Revendications 1 á 4, **caractérisé en ce que** la garniture de broyage pour le broyage de la cellulose exerce une force d'écrasement, de coupe et de friction.

7. Procédé pour la production de cellulose alcaline selon l'une des Revendications 5 ou 6 **caractérisé en ce que** la garniture de broyage pour le broyage de la cellulose effectue une vibration oscillatoire, de préférence annulaire.

8. Procédé pour la production de cellulose alcaline selon l'une des Revendications 5 à 7 **caractérisé en ce que** la commande des relations entre les forces de choc et de friction ou les forces d'écrasement, de coupe et de friction comprend les paramètres :
• sélection du corps broyant ;
• vitesse de rotation / fréquence ; et
• diamètre de la vibration annulaire ou amplitude de la vibration annulaire.

9. Procédé pour la production de cellulose alcaline selon l'une quelconque des Revendications précédentes, **caractérisé en ce qu'**il se produit un apport en énergie dans la cellulose par la garniture de broyage pour le broyage de la cellulose au moyen de forces de choc et de friction ou les forces d'écrasement, de coupe et de friction à une fréquence comprise entre 500 Hz et 2 000 Hz et une amplitude de vibration comprise entre 5 mm et 20 mm.

10. Procédé pour la production de cellulose alcaline selon l'une des Revendications 5 à 9 **caractérisé en ce que** la garniture de broyage est un broyeur vibrant, un broyeur vibrant à disque ou un moulin à barre.

11. Procédé pour la production de cellulose alcaline selon l'une quelconque des Revendications précédentes, **caractérisé en ce que** le broyage est effectué au moyen d'un broyeur résistant à l'abrasion et doté d'un revêtement résistant à l'abrasion, de préférence en inox.

12. Procédé pour la production de cellulose alcaline selon l'une quelconque des Revendications précédentes, **caractérisé en ce que** la soude caustique présente une concentration comprise entre 2 et 11%, de façon préférentielle, entre 2 et 8%, de façon particulièrement préférentielle entre 2 et 5%.

13. Procédé pour la production de cellulose alcaline selon l'une des Revendications 2 à 12 **caractérisé en ce que** le moût présente une teneur en substance > 5% en poids et/ou < 10% en poids.
